# EUROPEAN PATENT APPLICATION

(11) **EP 3 098 749 A1**
(43) Date of publication of application: **30.11.2016**
(21) Application number: 16164032.1
(22) Date of filing: 06.04.2016
(51) Int. Cl.: G06K 7/00, G06Q 10/08, G06Q 20/32, G07G 3/00

(54) **SALES ASSISTING SYSTEM**

(30) Priority: 25.05.2015 JP 2015105766
(71) Applicant: Hosiden Corporation, Yao-shi, Osaka 581-0071 (JP)
(72) Inventor: MURAOKA, Shunji, Osaka 5810071 (JP); GOTODA, Masanori, Osaka 581-0071 (JP); INOUE, Hirofumi, Osaka 581-0071 (JP); OKANO, Shingo, Osaka 581-0071 (JP)
(74) Representative: Lemcke, Brommer & Partner Patentanwälte Partnerschaft mbB

(57) **Abstract**

A sales assisting system (1) includes an acceleration sensor (10) configured to detect acceleration applied to a sales article (2), a beacon terminal (20) associated with the sales article (2) and configured to transmit to its surrounding a signal containing result of the acceleration detection and terminal information, a gateway (30) configured to identify the beacon terminal (20) based on the terminal information, and a host terminal (50) configured to report a predetermined reporting content to a reporting subject (200) based on the result of acceleration detection by the acceleration sensor (10) for the sales article (2) associated with the beacon terminal (20) identified by the gateway (30).

## Description

### TECHNICAL FIELD

This disclosure relates to a sales assisting system configured to assist sales of articles displayed for sales in a store.

### RELATED ART

When a customer is taking a article in hand (evaluating the article) in a store or the like, it is effective for promotion of sales of the article if a store clerk of the store waits on this customer. However, depending on the size of the store or the number of store clerks available, it is not easy for a store clerk to know whether or not a customer is checking a article in hand in a store or the like. Then, as a technique available to enable a store clerk to know a customer's action of taking a article in hand, there are techniques described in JP2014-1987A and JP2003-346107A.

JP2014-1987A describes a position detecting system including a wireless transmitting device, a wireless terminal, a gateway and a managing terminal. The wireless terminal includes an acceleration sensor. When, a change in acceleration is detected by this acceleration sensor, the wireless terminal receives position information from the wireless transmitting device and transmits this position information and terminal information of the wireless terminal to the gateway.

JP2003-346107A describes an article management system having a wireless article management tag (corresponding to a "beacon terminal") to be attached for its use to an article to be managed (corresponding to a "sales article"). The article management system includes the wireless article management tag, a main unit configured to transmit a command via radio wave to the wireless article management tag and a control unit for controlling the main unit. The wireless article management tag includes a vibration sensor for detecting vibration and this tag is attached to each individual article to be managed. In operation, when its vibration sensor detects vibration, the wireless article management tag enters a communication operation mode and activates a buzzer when the tag enters a transmission wave reachable distance of the main unit.

### SUMMARY

According to the technique described in JP2014-1987A, the wireless terminal will be attached to a sales article for instance and then, if the acceleration sensor detects change in acceleration, it can be presumed that a customer has picked up the article. However, with this technique described in JP2014-1987A, although detection of the article being picked up is possible through change in acceleration, there is no means for a store clerk to know occurrence of this detection of acceleration.

Further, according to the technique described in JP2003-346107A, when the vibration sensor senses vibration, it is presumed that a customer has picked up an article to be managed and a buzzer is activated for sounding from the wireless article management tag, so that notification to a store clerk is made possible. However, this may annoy the customer and give discomfort to the customer.

Embodiments of the present invention comprise a sales assisting system capable of reporting a customer's picking up a sales article to a clerk or attendant of the store without giving discomfort to the customer.

A sales assisting system according to this disclosure comprises:
an acceleration sensor configured to detect acceleration applied to a sales article displayed for its sale in a store;
a beacon terminal associated with the sales article and configured to transmit to its surrounding a signal containing result of the acceleration detection and terminal information;
a gateway configured to receive the signal and identify the beacon terminal based on the terminal information;
a storage section configured to store a reporting content to be reported to a predetermined reporting subject: and
a host terminal configured to report the reporting content stored in the storage section to the reporting subject based on the result of acceleration detection by the acceleration sensor for the sales article associated with the beacon terminal identified by the gateway.

In the above case, communication between the host terminal and the beacon terminal can be effected via the gateway. So, even when a plurality of beacon terminals are present, it is still possible to prevent increase of an amount of calculation to be effected by the host terminal. Further, since the host terminal does not communicate directly with the beacon terminal, there is no need to configure the host terminal with using some high-performance arithmetic processing unit. Moreover, with the above-described arrangement, reporting content corresponding to a magnitude of acceleration applied to the article can be reported to the reporting subject. Also, such reporting can be done only for the reporting subject, so that no discomfort will be given to other customers and the action of customer's picking up an article can be reported to the reporting subject.

According to one embodiment of the sales assisting system, the beacon terminal can be configured to vary cycle of transmitting the signal in accordance with the magnitude of the detected acceleration.

In the above case, in accordance with a particular cycle of the beacon terminal signal, the gateway can identify the magnitude of the acceleration applied to the article.

According to a further embodiment of the sales assisting system, the reporting subject can be a sales clerk in charge of sales of the sales article associated with the beacon terminal identified by the gateway.

In the above case, it becomes possible to configure such that the host terminal will effect a customer attending report urging customer attending to a mobile terminal carried by the sales clerk in charge thereof or that the host terminal per se outputs a sound or the like as a customer attending report urging customer attending. Therefore, even when the sales clerk in charge is away from the spot of the sales article, the clerk can know a customer's having picked up the article, so that the clerk can rush to the spot to attend to the customer.

According to a still further embodiment of the sales assisting system, the terminal information can include battery level information indicating a remaining charge in a battery acting as a power source of at least one of the acceleration sensor and the beacon terminal.

In the above case, it becomes possible for the reporting subject upon receipt of the reporting content to grasp the remaining charge amount of the battery (power source) of at least one of the acceleration sensor and the beacon terminal. Therefore, it becomes possible to effect charging or replacement of the battery or replacement of the acceleration sensor or the beacon terminal, before the acceleration sensor or the beacon terminal becomes inoperative due to exhaustion of the remaining charge of its battery.

According to a still further embodiment of the sales assisting system, the acceleration sensor is incorporated in the beacon terminal and the beacon terminal is configured to be attached to the sales article.

In the above case, the beacon terminal and the acceleration sensor can be formed compact, so that it becomes possible for the terminal or the sensor to be visibly non-obstructive when attached to the sales article.

According to a still further embodiment of the sales assisting system, the host terminal is configured to effect reporting to the reporting subject indicating that the signal cannot be received from the beacon terminal, in case the gateway cannot receive the signal from the beacon terminal for a predetermined period.

In the above case, when reception of the signal from the beacon terminal becomes impossible for the predetermined period, there is possibility of the sales article being moved. So, the sales clerk in charge or a security person can rush to the sales spot of this sales article. Further, it becomes also possible to search for the sales product through analysis of monitoring image of a monitoring camera or the like.

### BRIEF DESCRIPTION OF THE DRAWING

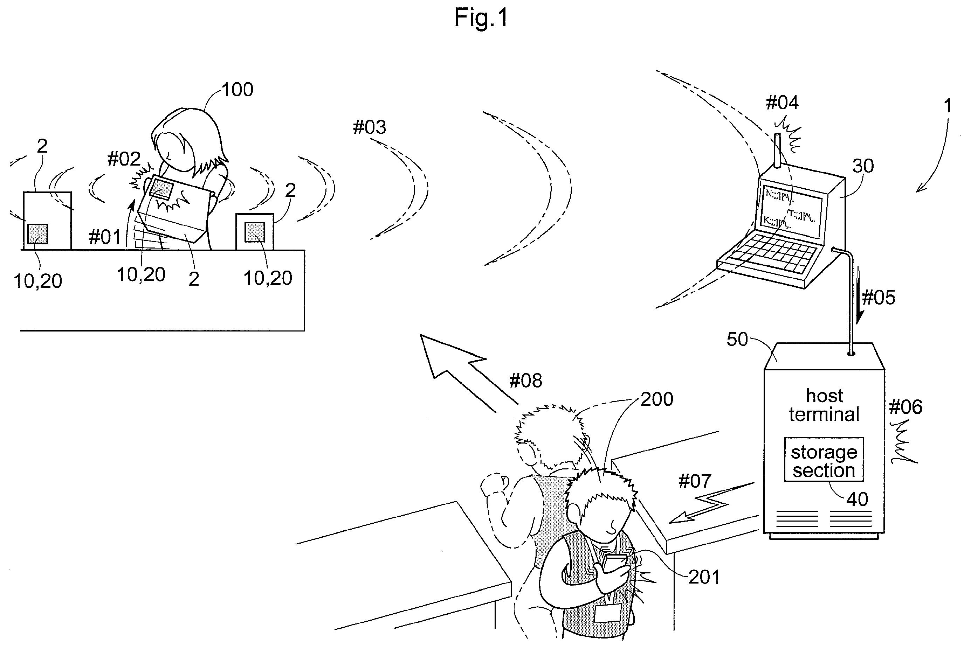

Fig. 1 is a system configuration diagram schematically showing configuration of a sales assisting system.

### DESCRIPTION OF EMBODIMENTS

A sales assisting system relating to this disclosure is configured to have a function of assisting sales of a sales article displayed for its sale in a store. Next, a sales assisting system 1 according to this embodiment will be explained. Fig.1 shows a system configuration diagram of the sales assisting system 1. As shown in Fig. 1, this sales assisting system 1 includes an acceleration sensor 10, a beacon terminal 20, a gateway 30, a storage section 40 and a host terminal 50.

The acceleration sensor 10 detects acceleration applied if any to a sales article 2 displayed for its sale in a store. Here, "a sales article 2 displayed for its sale in a store" refers to an article or product which is displayed for its sales in the store for allowing a customer 100 to pick it up in hand for evaluation as desired. Acceleration applied to the sales article 2 means acceleration applied to the sales article 2 under its displaying state. Here, in a store, a plurality of sales articles 2 may be displayed at one time. In such case, advantageously, the acceleration sensor 10 will be provided for each individual sales article whose sales is desired to be assisted by the sales assisting system 1. With this, when the customer 100 picks up the sales article 2 in hand (#01), the acceleration sensor 10 can detect acceleration which will be applied to this sales article 2 as a result of the action (#02).

The beacon terminal 20 is associated with the sales article 2 and this terminal 20 is configured to transmit, to its surrounding, a signal which includes result of acceleration detection and terminal information. In the instant embodiment, the above language "result of acceleration detection" refers to numerically converted form (quantitative form) of magnitude of acceleration detected by the acceleration sensor 10. The beacon terminal 20 is to be attached to the sales article 2. Here, the language "attached to the sales article 2" means e.g. adhesive bonding of the beacon terminal 20 to the sales article 2. So, when a customer 100 moves the sales article 2 from its displaying position, the beacon terminal 20 too is moved therewith. Needless to say, the beacon terminal 20 can be attached to the sales article 2 with use of a wire or the like. Therefore, the language "associated with the sales article 2" means one-to-one connection of the beacon terminal 20 with a particular sales article 2 of sales articles 2 on display at a store. Incidentally, the beacon terminal 20 is not limited to the above-described arrangement of one-to-one connection with a particular sales article 2. Alternatively, one beacon terminal 20 can be provided for a group of sales articles such as a show case accommodating a plurality of sales articles 2 therein. In this case, a plurality of sales articles 2 can be managed together by one beacon terminal 20.

The result of acceleration detection is transmitted from the acceleration sensor 10 to the beacon terminal 20. With this, a device which receives this signal of the beacon terminal 20 (in the instant embodiment, this device corresponds to the "gateway 30" to be described later) can identify the magnitude of the acceleration which was applied to the sales article 2. Here, the language "terminal information" refers to identification information that allows identification of the beacon terminal 20. Specifically, this corresponds to an ID assigned to each individual beacon terminal 20. With this, the above-described device that has received the signal of the beacon terminal 20 can identify this beacon terminal 20 which outputted the signal. The beacon terminal 20 generates a signal based on the result of such acceleration detection and the terminal information and transmits this signal to its surrounding (#03). In the instant embodiment, the acceleration sensor 10 is incorporated within the beacon terminal 20. With this, it becomes possible to form the acceleration sensor 10 and the beacon terminal 20 as one integral unit, so that transmission of result of acceleration detection from the acceleration sensor 10 to the beacon terminal 20 can be implemented by a simple configuration. The beacon terminal 20 corresponds to a "transmitter" for transmitting result of acceleration detection and terminal information.

Further, advantageously, the terminal information can include battery level (charged capacity) information indicative of remaining charge in a battery as a power source of the acceleration sensor 10 and the beacon terminal 20. With this, it becomes possible to make known to its surrounding the remaining charge in the battery of the acceleration sensor 10 and the beacon terminal 20.

Further, the acceleration sensor 10 can be configured to operate under a low power consumption mode in which the acceleration detection result is not outputted to the beacon terminal 20 in case the magnitude of the detected acceleration is below a preset value and to operate under a normal power consumption mode consuming greater power than the low power consumption mode in which the acceleration detection result is outputted to the beacon terminal 20 in case the magnitude of the detected acceleration is greater than or equal to the preset value. Therefore, when the acceleration sensor 10 is under the low power consumption mode, the beacon terminal 20 includes only the terminal information in the signal to be transmitted, not including the acceleration detection result. With this, reduction of charged capacity amount of the battery of the beacon terminal 20 can be restricted. Incidentally, the beacon terminal 20 can alternatively be configured not to transmit any signal at all to its surrounding when the acceleration sensor 10 is under the low power consumption mode, thus making even more saving of charged capacity amount possible.

The gateway 30 receives the signal transmitted from the beacon terminal 20 and identifies this beacon terminal 20 based on the terminal information (#04). The signal transmitted from the beacon terminal 20 means the signal containing the acceleration detection result obtained by the acceleration sensor 10 and the terminal information of the beacon terminal 20. The gateway 30 receives such signal and identifies the beacon terminal 20 based on the terminal information included in this signal. Therefore, the gateway 30 corresponds to a "receiver" for receiving a signal outputted from the beacon terminal 20. As described above, the signal outputted from the beacon terminal 20 includes the terminal information such as an ID which allows unique identification of the beacon terminal 20. The gateway 30 obtains the terminal information included in the received signal and identifies the beacon terminal 20 which outputted this signal. The gateway 30 transmits the information of the identified beacon terminal 20 to the host terminal 50 to be described later (#05).

The storage section 40 stores therein a reporting content to be reported to a predetermined reporting subject 200. Here, the language "a predetermined reporting subject 200" refers to e.g. a sales clerk in charge of sales of the sales article 2 associated with the beacon terminal 20 identified by the gateway 30. Needless to say, the predetermined reporting subject can also be any other clerk or attendant of the store. The language "reporting content" refers to a reporting content for use in assistance of sales of the sales article 2 by the sales assisting system 1.

The host terminal 50 reports to the reporting subject 200 the reporting content stored in the storage section 40 based on the acceleration detection result by the acceleration sensor 10 of the sales article 2 associated with the beacon terminal 20 identified by the gateway 30. Here, the language "the beacon terminal 20 identified by the gateway 30" means the beacon terminal 20 uniquely identified by the gateway 30 that received the signal and identified this terminal based on the terminal information included in this signal. The above language "the sales article 2 associated with the beacon terminal 20" means the sales article 2 whose acceleration detection result was obtained in the signal transmitted by the beacon terminal 20.

Here, the acceleration sensor 10 detects a so-called triple-axis acceleration. In the instant embodiment, a peak value of synthesis of such three axes acceleration is employed as a detection value. If this detection value is greater than or equal to a preset value (e.g. 1.5 G), then, the host terminal 50 will report the reporting content to the reporting subject 200. Here, "predetermined value" can advantageously comprise a value inclusive of the gravitational acceleration (1G). In this way, when the magnitude of acceleration is greater than or equal to a preset value, the host terminal 50 will read out the reporting content stored in the storage section 40 (#06) and then report the read reporting content to the reporting subject 200 (#07).

In the above, advantageously, the host terminal 50 reports the reporting content to e.g. a mobile terminal 201 carried by a sales clerk in charge of sales of the sales article 2 as the reporting subject 200. With this arrangement, the sales clerk can attend to the customer 100 by rushing to the sales spot of the sales article 2 (#08).

Further, advantageously, the host terminal 50 can report to the reporting subject 200 not only the reporting content described above, but also the battery level (charged capacity) information described above. With this, it becomes possible to effect charging or replacement of the battery or replacement of the acceleration sensor 10 and the beacon terminal 20 (by e.g. new ones), before the acceleration sensor 10 and the beacon terminal 20 attached to the sales article 2 become inoperative due to exhaustion of the remaining charge of its battery.

Further, advantageously, the host terminal 50 can be configured to effect reporting to the reporting subject 200 indicating that the signal cannot be received from the beacon terminal 20, in case the gateway 30 cannot receive the signal from the beacon terminal 20 for a predetermined period. With this arrangement, it becomes possible e.g. to allow the reporting subject 200 to grasp e.g. the sales article 2 being taken out of the store.

With the sales assisting system 1 described above, sales assistance can be provided in real time and power consumption by the acceleration sensor 10 and the beacon terminal 20 can be reduced. Further, in case the gateway 30 fails to receive any signal from the beacon terminal 20 for a predetermined period, this can be judged and grasped as occurrence of theft of the sales article 2. So that, checking and grasping of stock can be readily made, and trouble of inventory check by stocktaking operations can be reduced also. Moreover, after discovery of theft, by checking monitoring image of the security camera, it is possible to check the manner of theft and the face or looks of the shoplifter, etc. to be effectively utilized for measure to be taken.

### [Other Embodiments]

In the foregoing embodiment, it was explained that the host terminal 50 reports the reporting content to the mobile terminal 201 carried by the sales clerk in charge of the sales article 2 as the reporting subject 200. However, it is also possible to configure such that the host terminal 50 effects reporting via output of a sound.

In the foregoing embodiment, it was explained that the result of acceleration detection contained in the signal transmitted from the beacon terminal 20 is the magnitude of acceleration and comprises numerical form or representation of acceleration. Instead, the magnitude of acceleration can be divided into predetermined ranges, so that information indicative of such division (e.g. a level) can be transmitted as the acceleration detection result. With this, the signal configuration can be simplified, so that decrease of the charged capacity in the battery of the beacon terminal 20 can be further reduced.

In the foregoing embodiment, it was explained that the terminal information includes charged capacity information indicative of the amount of charge remaining in the battery of the acceleration sensor 10 and the beacon terminal 20. However, it is also possible to configure so that such charged capacity information is not included in the terminal information or so that the terminal information includes the charged capacity information indicative of the amount of charge remaining in the battery as the battery of either one of the acceleration sensor 10 and the beacon terminal 20.

In the foregoing embodiment, it was explained that the acceleration sensor 10 is incorporated within the beacon terminal 20 and this beacon terminal 20 is to be attached to the sales article 2. However, it is also possible to configure such that the acceleration sensor 10 and the beacon terminal 20 are provided separately or that the acceleration sensor 10 alone is attached to the sales article 2 and the beacon terminal 20 is disposed separately from the sales article 2.

In the foregoing embodiment, it was explained that the signal transmitted from the beacon terminal 20 includes the result of acceleration detection (magnitude of acceleration detected by the acceleration sensor 10) and the gateway 30 receiving this signal from the beacon terminal 20 can identify the magnitude of the acceleration applied to the sales article 2 detected by the acceleration sensor 10, based on the detection result included in the above signal. However, it is also possible to configure the beacon terminal 20 to change the cycle of transmitting the signal in accordance with the magnitude of the acceleration detected by the acceleration sensor 10. In this case, the acceleration detection result will not be included in the signal from the beacon terminal 20, and based on the cycle of this signal, the gateway 30 can determine the magnitude of the acceleration.

In the foregoing embodiment, it was explained that the host terminal 50 reports the reporting content to the reporting subject 200 in case the result of acceleration detection is greater than or equal to a preset value. However, it is also possible to configure e.g. such that the host terminal 50 will select reporting content and/or reporting subject 200 in accordance with the magnitude of the acceleration. With this configuration, if it can be judged based on the magnitude of acceleration that a customer 100 is evaluating the sales article 2, reporting is made only to the sales clerk; whereas, if it can be judged that there is possibility of the sales article 2 having been shop-lifted, reporting is made to the sales clerk and also to a security attendant.

This disclosure can be used in a sales assisting system for assisting sales of a sales article displayed for its sale in a store.

## Claims

1. A sales assisting system (1) comprising:
an acceleration sensor (10) configured to detect acceleration applied to a sales article (2) displayed for its sale in a store;
a beacon terminal (20) associated with the sales article (2) and configured to transmit to its surrounding a signal containing result of the acceleration detection and terminal information;
a gateway (30) configured to receive the signal and identify the beacon terminal (20) based on the terminal information;
a storage section (40) configured to store a reporting content to be reported to a predetermined reporting subject (200): and
a host terminal (50) configured to report the reporting content stored in the storage section (40) to the reporting subject (200) based on the result of acceleration detection by the acceleration sensor (10) for the sales article (2) associated with the beacon terminal (20) identified by the gateway (30).

2. The sales assisting system (1) according to claim 1, wherein the beacon terminal (20) is configured to vary cycle of transmitting the signal in accordance with the magnitude of the detected acceleration.

3. The sales assisting system (1) according to claim 1 or 2, wherein the reporting subject (200) comprises a sales clerk in charge of sales of the sales article (2) associated with the beacon terminal (20) identified by the gateway (30).

4. The sales assisting system (1) according to any one of claims 1-3, wherein the terminal information includes battery level information indicating a remaining charge in a battery acting as a power source of at least one of the acceleration sensor (10) and the beacon terminal (20).

5. The sales assisting system (1) according to any one of claims 1-4, wherein the acceleration sensor (10) is incorporated in the beacon terminal (20) and the beacon terminal (20) is configured to be attached to the sales article (2).

6. The sales assisting system (1) according to any one of claims 1-5, the host terminal (50) is configured to effect reporting to the reporting subject (200) indicating that the signal cannot be received from the beacon terminal (20), in case the gateway (30) cannot receive the signal from the beacon terminal (20) for a predetermined period.
